# EUROPEAN PATENT APPLICATION

(11) **EP 2 426 087 A2**
(43) Date of publication of application: **07.03.2012**
(21) Application number: 11009549.4
(22) Date of filing: 03.07.2006
(51) Int. Cl.: C01B 33/037, C01B 33/02, H01L 31/04

(54) **Silicon recycling method, and silicon and silicon ingot manufactured with that method**

(30) Priority: 04.07.2005 JP 2005195029
(62) Divisional of application: 06780733.9
(71) Applicant: Sharp Kabushiki Kaisha, Osaka-shi, Osaka 545-8522 (JP)
(72) Inventor: Fukuyama, Toshiaki, Nara-shi Nara 631-0846 (JP); Okuno, Tetsuhiro, Nara 636-0202 (JP); Wakuda, Junzo, Kashihara-shi Nara 634-0014 (JP)
(74) Representative: Müller - Hoffmann & Partner

(57) **Abstract**

In order to efficiently recycle a silicon scrap obtained by cutting a silicon chunk as a raw material silicon for solar batteries, a silicon recycling method of the present invention, according to one aspect, includes the steps of melting a silicon scrap by heating, and immersing a crystallization substrate in molten silicon and depositing silicon on a surface of the crystallization substrate. The step of separating silicon on the surface of the crystallization substrate from the crystallization substrate is preferably included. In addition, a silicon ingot obtained by melting the silicon raw material for solar batteries in a mold and solidifying the same is suitable as the silicon chunk.

## Description

### TECHNICAL FIELD

The present invention relates to a silicon recycling method. In addition, the present invention relates to silicon and a silicon ingot obtained with that method. More specifically, the present invention relates to silicon recycling by removing an inclusion and an impurity contained in a silicon scrap produced by cutting of a silicon ingot.

### BACKGROUND ART

With growing awareness of energy issues such as exhaustion of fossil fuel resources and environmental issues such as global warming, demands for solar batteries have rapidly grown in recent years. Silicon that can be used for a solar battery cell is required to have high purity of 99.9999% or higher and specific resistance of 0.5Ωcm or higher, and nonconforming products produced when high-purity silicon used in semiconductor industry or a substrate for an IC is manufactured are used as raw materials. High-purity silicon for a semiconductor, however, is expensive and nonconforming products are small in production quantity, and supply is thus limited. A problem has not arisen so far because production quantity of nonconforming products of silicon for electronic devices has been greater than demand for solar batteries. Recently, however, demand for solar batteries is greater than production quantity of nonconforming products of silicon for electronic devices, and shortage of raw material silicon for solar batteries has become a serious problem. Solution of such a problem as early as possible is strongly demanded.

Under the circumstances, currently, an ingot of polycrystalline silicon, which is a mainstream raw material for solar batteries, is fabricated with the following method. As described previously, nonconforming products produced when high-purity silicon used in semiconductor industry or a substrate for an IC is manufactured are molten in a mold and solidified in that identical mold, or silicon molten in a crucible is put in a separate mold and solidified therein, thus obtaining the ingot of polycrystalline silicon. In any case, as silicon in a molten state should be solidified in the mold, a release agent is applied to an inner surface of the mold. The release agent serves to mitigate thermal stress in the silicon ingot that is generated during the course of solidification and cooling of silicon and to prevent fusing due to reaction of active silicon melt with the mold.

In general, the release agent is formed with a method of mixing powders of silicon nitride, silicon carbide, silicon oxide, and the like in a solution composed of an appropriate binder and a solvent, and stirring the mixture to prepare slurry, and the inner surface of the mold is coated by such means as application or spraying. In addition, the release agent in a slurry state is generally prepared by mixing as appropriate a solvent such as water or alcohol, a binder as mold release agent, an additive for enhancing flowability, and the like, and stirring the mixture.

PVA (polyvinyl alcohol) is a substance used most among binders for molding for the release agent. As PVA is excellent in adhesiveness, it is suitable for bonding and adhesion between powders. The binder for molding turns to a pyrolysate as a result of heating and contact with a melt in a subsequent step. In order to prevent such a pyrolysate resulting from the binder for molding from mixing in the melt, after application of the binder for molding, a binder removal process is normally performed at a temperature from approximately 600°C to 900°C in an oxidizing atmosphere.

Conventional art in connection with the present invention has been described above based on general technical information acquired by the applicant, and to the best knowledge of the applicant, the applicant has no information to be disclosed as the prior art document information prior to filing of the application.

### DISCLOSURE OF THE INVENTION

### PROBLEMS TO BE SOLVED BY THE INVENTION

In such a binder removal process under vacuum or in an inert atmosphere, pyrolysis of organic polymers making up the binder rapidly proceeds. Consequently, hydrogen atoms are abstracted and CH extends linearly and then becomes cyclic, whereby a cyclic compound such as benzene or the like is formed. The compound further repeats dehydrogenation, condenses to a considerable extent, and grows to soot containing a large amount of carbon. In other words, the organic polymer is structured such that hydrogen atoms are normally arranged around a carbon atom skeleton toward the outside of the polymer, and the polymer has a straight-chain shape without aggregating, owing to repulsive force between hydrogen atoms. Supply of thermal energy, however, increases vibrational energy of bond between hydrogen atom and carbon atom, which results in breaking of the bond and abstraction of hydrogen atom. Once the polymer is stabilized as soot, removal thereof through pyrolysis is difficult. Accordingly, the soot comes in contact with a silicon melt while it remains mixed in the release agent or adhered to the surface thereof. The soot in contact with the melt or carbon blended into the melt forms silicon carbide (SiC), and it not only deteriorates characteristics of the solar battery but also lowers yield as it is deposited as foreign substances. In addition, a problem such as cut of a wire saw used in wafer slicing may be caused.

Thus, in fabricating a polycrystalline silicon ingot, SiC produced in pyrolysis of the release agent or the binder and formed as a result of reaction with the silicon melt adheres to a side surface portion and a bottom surface portion of silicon, that is, an ingot, in contact with the mold. In addition, as the ingot is fabricated through unidirectional solidification, foreign substances and impurities such as the stripped release agent or SiC rise to surface and condense at an upper surface portion of the ingot. Therefore, the upper surface portion, the side surface portion and the bottom surface portion of the ingot including the release agent, in particular SiC, are cut away with a diamond saw. Though a part of the cut-away portion (scrap) is recycled after a portion containing foreign substances or impurities is cut off, most parts are reserved or discarded.

A task of the present invention is to provide a recycling method as high-purity silicon for solar batteries, by removing SiC particles causing cut of a wire of a wire saw from an upper surface scrap, a side surface scrap and a bottom surface scrap cut away from a silicon ingot and decreasing impurity element. In addition, a task of the present invention is to provide silicon and a silicon ingot obtained with that method.

### MEANS FOR SOLVING THE PROBLEMS

The present invention is directed to a silicon recycling method of using a silicon scrap obtained by cutting a silicon chunk as a silicon raw material for a solar battery, and according to one aspect, the silicon recycling method includes the steps of: melting the silicon scrap by heating; forming a silicon ingot by unidirectionally solidifying molten silicon; and removing an impurity-concentrated portion of the silicon ingot. Alternatively, according to another aspect, a silicon recycling method includes the steps of: melting the silicon scrap by heating; injecting a process gas into molten silicon; forming a silicon ingot by unidirectionally solidifying the molten silicon; and removing an impurity-concentrated portion of the silicon ingot.

Alternatively, according to another aspect, a silicon recycling method includes the steps of: melting the silicon scrap by heating; and immersing a crystallization substrate in molten silicon and depositing silicon on a surface of the crystallization substrate. Alternatively, according to another aspect, a silicon recycling method includes the steps of: melting the silicon scrap by heating; injecting a process gas into molten silicon; and immersing a crystallization substrate in the molten silicon and depositing silicon on a surface of the crystallization substrate. Meanwhile, according to another aspect, a silicon recycling method includes the steps of: melting the silicon scrap by heating; injecting a process gas into molten silicon; removing a suspended substance at a surface of the molten silicon; and immersing a crystallization substrate in the molten silicon and depositing silicon on a surface of the crystallization substrate. Preferably, a process gas is injected while the molten silicon is stirred. The step of separating silicon on the surface of the crystallization substrate from the crystallization substrate is preferably included. A silicon ingot obtained by melting a silicon raw material for solar batteries in a mold and solidifying the molten silicon raw material may be used as the silicon chunk. At least one of an upper surface scrap, a side surface scrap and a bottom surface scrap of the silicon ingot may be used as the silicon scrap obtained by cutting the silicon ingot.

Use of the silicon scrap after a surface thereof is ground or use of the silicon scrap after it is crushed is preferred, and crushing is desirably performed after the silicon scrap is cut. In addition, use of the silicon scrap after it is cleaned is preferred, and cleaning is desirably performed after the silicon scrap is crushed. Silicon according to the present invention is characterized by being manufactured with the recycling method described above. In addition, a silicon ingot according to the present invention is characterized in that it is formed with unidirectional solidification after such silicon is molten in a mold.

### EFFECTS OF THE INVENTION

A silicon scrap, which has not been available for use due to a problem of cut of a wire of a wire saw or the like caused by inclusion of foreign substances, in particular SiC particles, can be recycled as a high-purity raw material silicon for solar batteries.

### BRIEF DESCRIPTION OF THE DRAWINGS

Fig. 1 is a diagram showing steps in a silicon recycling method in Example 1 of the present invention.
Fig. 2 is a schematic diagram showing a cut portion of a silicon ingot for obtaining a silicon scrap to be utilized in the present invention.
Fig. 3 is a schematic diagram of a process gas injection and stirring apparatus used in the present invention.
Fig. 4 is a schematic diagram of a casting apparatus used in the present invention.
Fig. 5 is a schematic diagram of an apparatus used for immersing a cooling substrate and lifting up a purified silicon chunk in the present invention.
Fig. 6 is a schematic diagram of a silicon chunk strip apparatus used in the present invention.

### DESCRIPTION OF THE REFERENCE SIGNS

20 single crystal silicon ingot; 21 single crystal silicon ingot scrap; 22 polycrystalline silicon ingot; 23 side surface scrap; 24 bottom surface scrap; 25 upper surface scrap; 31 melting furnace; 32 crucible; 33 electromagnetic induction heating apparatus; 34, 45, 55 molten silicon; 35a stirring shaft; 35b stirring portion; 35d process gas introduction passage; 35e process gas outlet; 36 fine bubbles; 40 mold; 43 heating apparatus; 49 crucible; 50 hollow rotation shaft; 50a cooling fluid introduction pipe; 50b cooling gas introduction passage; 50d cooling fluid discharge passage; 50e cooling fluid discharge pipe; 53, 63 crystallization substrate; 53a cooling gas outlet; 56 purified silicon; 60 hollow rotation shaft; 62 purified silicon collection container; and 67 heater.

### BEST MODES FOR CARRYING OUT THE INVENTION

### (Silicon Scrap)

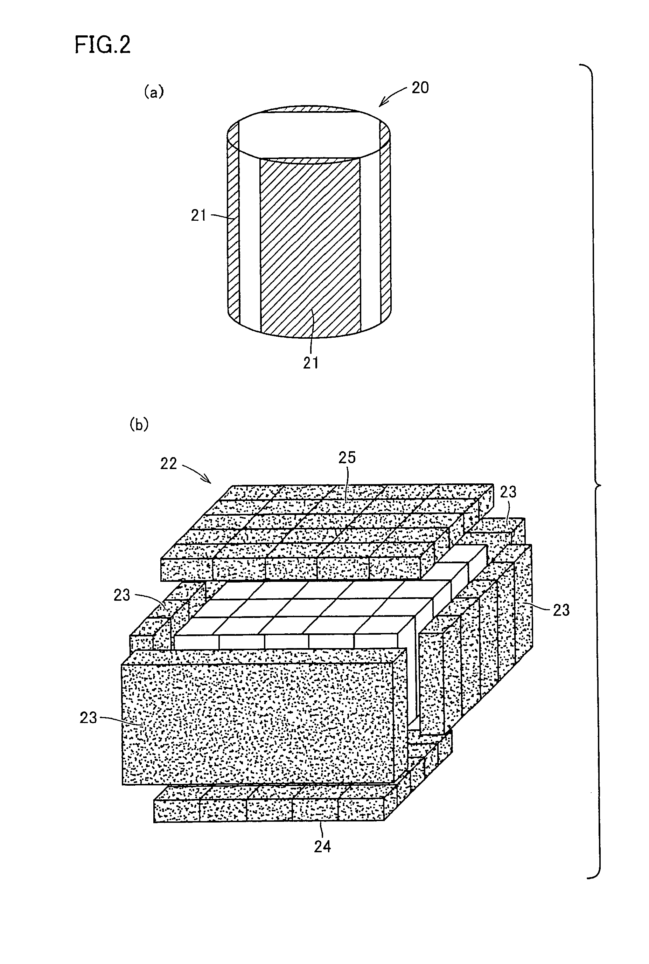

An example of a silicon chunk includes a silicon ingot obtained by melting a silicon raw material for solar batteries in a mold and solidifying the same, and any of single crystal silicon and polycrystalline silicon may be used. A method of fabricating a polycrystalline silicon chunk mainly includes a Czochralski method (CZ) and a floating zone melting method (FZ), and the relatively inexpensive CZ method is predominantly used for the purpose of solar batteries. According to the CZ method, a columnar high-purity single crystal silicon ingot is obtained by melting a silicon polycrystalline raw material chunk in a crucible made of quartz, thereafter bringing a seed crystal in contact with a molten silicon surface, and lifting up the same while cooling. Fig. 2 is a schematic diagram showing a cut portion of a silicon ingot. As shown in Fig. 2(a), in order to obtain a wafer for solar batteries, a side surface portion of a columnar single crystal silicon ingot 20 is cut away to obtain a block in a shape of a substantially quadrangular prism, and the block is sliced into wafers. Here, the portion cut away in cutting into a block is a single crystal silicon ingot scrap 21.

On the other hand, a method of fabricating a polycrystalline silicon chunk includes a method called a casting method, in which direct cooling and solidification is performed in a mold. According to the casting method, a raw material silicon molten by heating is directly cooled and unidirectionally solidified in a mold made of quartz or the like, so that a polycrystalline silicon ingot 22 as shown in Fig. 2(b) is obtained. Polycrystalline silicon ingot 22 thus obtained is cast in a mold made of quartz or the like. As a release agent has been applied to the inside of the mold, foreign substances or impurities are included in the side surface portion and the bottom surface portion of polycrystalline silicon ingot 22. Examples of these foreign substances or impurities include the stripped release agent, quartz adhered to silicon due to strip of the release agent and resultant contact of molten silicon with the surface of the mold, SiC formed as a result of reaction between silicon and soot generated from the release agent, or the like.

These foreign substances and impurities cause a problem of wire saw cut and deterioration in characteristics of a solar battery cell in the steps until the solar battery cell is manufactured. Therefore, for example, the side surface and the bottom surface of the silicon ingot are cut away with a diamond saw. Here, the diamond saw refers to a band saw in which diamond chips are buried. The scraps cut at this time are a side surface scrap 23 and a bottom surface scrap 24 respectively. In addition, during casting, as solidification is unidirectional from the bottom surface portion toward the upper surface portion of the mold, foreign substances and impurities such as the release agent and SiC condense at the surface of molten silicon, that is, the upper portion of the ingot. Therefore, the upper portion of polycrystalline silicon ingot 22 is also cut away, for example, with the diamond saw. The scrap cut at this time is an upper surface scrap 25.

In the present invention, the silicon scrap obtained by cutting the silicon chunk such as the silicon ingot is utilized as the silicon raw material for solar batteries. For the silicon scrap, at least one of single crystal silicon ingot scrap 21 cut away from single crystal silicon ingot 20, upper surface scrap 25, side surface scrap 23 and bottom surface scrap 24 cut away from polycrystalline silicon ingot 22 is used.

### (A step: step of grinding a surface of the scrap)

In the A step, the surface is ground in order to remove the release agent adhered to the surface of the silicon scrap obtained by cutting the silicon ingot, in particular the upper surface scrap, the side surface scrap and the bottom surface scrap, a particulate inclusion such as soot and SiC, and an impurity element such as Fe and Al mixed in the step of casting, cutting or the like. A grinding method may include a method of polishing with a grinder or a sander or a grinding method while injecting SiC abrasive grains. In addition, grinding means is not limited to a dry method, but a wet method, for example, of etching with a solution such as acid or alkali may be employed. Alternatively, a plasma etching method using a gas such as CF₄, CF₂Cl₂, CF₃Cl, and CF₆ may be employed. In the A step, the inclusion or the impurity adhered to the surface is scraped off by several µm (for example, approximately 3 µm) to several mm (for example, approximately 5mm).

### (B step: crushing step)

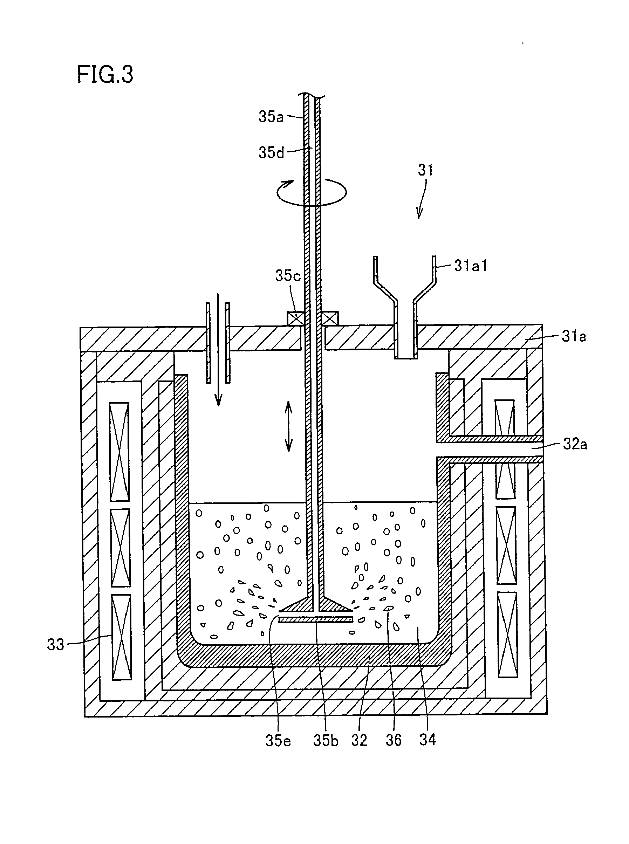

Fig. 3 is a schematic diagram of a process gas injection and stirring apparatus used in the present invention. A dimension of the scrap cut away from the silicon ingot is in a range from ten-odd cm to several ten cm. In the process gas injection and stirring apparatus, a raw material is put (hereinafter referred to as "charged") into molten silicon 34 within a crucible 32 from a material hopper 31a1 provided in an upper lid 31a of a melting furnace 31. Here, if a size of the charged raw material silicon is large, the molten silicon scatters. If silicon adheres to the upper portion of crucible 32, yield is lowered. In addition, if silicon having a large size is charged, the time required for melting the raw material becomes longer and productivity is deteriorated. Therefore, in this step, charging after crushing into a size of several cm is desirable. As impurities such as Fe, Al or C have adhered to the surface of the silicon scrap, in order to prevent mixing of such impurities, the crushing step is preferably performed after the surface of the silicon scrap is ground.

A generally used method such as a method using a jaw crusher, a hammer crusher, a roll crusher, or a mill crusher may be used for crushing. In addition, a crushing method of heating the scrap with a burner, an electric furnace or the like and thereafter dropping the scrap into liquid nitrogen or water may be employed.

### (C step: cleaning step)

The silicon ingot is normally cut with a diamond saw while an abrasive containing abrasive grains is injected. If the silicon ingot is molten without cleaning the abrasive away, the melting furnace is contaminated with oil contained in the abrasive. Therefore, in this step, cleaning is performed before loading or charging the cut-away scrap into the melting furnace. This step may be performed before the step of grinding the surface of the scrap (A step) or the crushing step (B step), however, the cleaning step is desirably performed after the crushing step, because impurity may be mixed from a blade for crushing in the crushing step.

A representative example of this step includes a surfactant bath, a water washing bath, an etching bath, a water washing bath, and a drying step. Examples of the etching bath include a bath containing a mixed acid which is a mixture liquid of hydrofluoric acid and nitric acid, an acid bath obtained by moderately diluting hydrochloric acid with water, an alkali bath obtained by moderately diluting alkali such as sodium hydroxide with water, or the like. The step is not limited to implementation by a single bath, and the surfactant bath, the water washing bath, the etching bath, and the drying step may be combined as appropriate. In order to clean away the abrasive or a lubricant, cleaning with oil such as kerosine is also effective.

### (D step: process gas injection and stirring step)

In this step, stirring is performed using an apparatus as shown in Fig. 3, while a process gas is injected. A wall of melting furnace 31 is made of stainless steel, and crucible 32 made of graphite into which the raw material silicon is charged, an electromagnetic induction heating apparatus 33, a stirring shaft 35a, and a stirring portion 35b attached to the lower portion thereof are provided. A seal mechanism 35c is provided in a portion where stirring shaft 35a penetrates the lid of melting furnace 31 in order to ensure air-tightness of melting furnace 31 and to allow rotation of stirring shaft 35a. A lift apparatus (not shown) for immersing stirring portion 35b in molten silicon within crucible 32 is provided at an upper end of stirring shaft 35a, and the lift apparatus is also capable of lifting up stirring portion 35b from the silicon melt. In addition, stirring shaft 35a has a process gas introduction passage 35d inside, and stirring portion 35b includes a process gas outlet 35e communicating with process gas introduction passage 35d. A process gas introduction pipe (not shown) may be provided instead of process gas outlet 35e of stirring portion 35b. Crucible 32 may be used in such a manner that a crucible made of quartz is placed in a crucible made of graphite or a susceptor made of graphite, and a crucible made of ceramics such as alumina may be used as appropriate.

A gas less reactive to silicon, for example, an inert gas such as argon, is particularly preferred as the process gas, and nitrogen or the like may be used. By injecting the process gas into the molten silicon, inclusion such as silicon carbide and silicon nitride in the molten silicon can be caused to rise to surface of the silicon melt. Meanwhile, by rotating stirring shaft 35a while injecting the process gas into the molten silicon, the process gas can be made finer so that a surface area of bubbles of the process gas injected into the molten silicon can be increased. Inclusions such as silicon carbide and silicon nitride contained in the molten silicon rise to surface of the silicon melt by means of the process gas that has been made finer. Therefore, by injecting the process gas while stirring the molten silicon after melting the silicon scrap by heating, efficiency in removing inclusions such as silicon carbide and silicon nitride contained in the molten silicon can be enhanced. Here, in order to achieve such a stirred state, mechanical stirring is preferred and stirring using a stirring portion in a shape of a rotating vane is further preferred. By rotating stirring shaft 35a while stirring portion 35b is immersed in the molten silicon, a rapid flow of the molten silicon is produced and the process gas is made finer, so that the process gas can uniformly be distributed in the molten silicon. The shape of stirring portion 35b is not limited, so long as the process gas can be made finer.

### (E step: casting step)

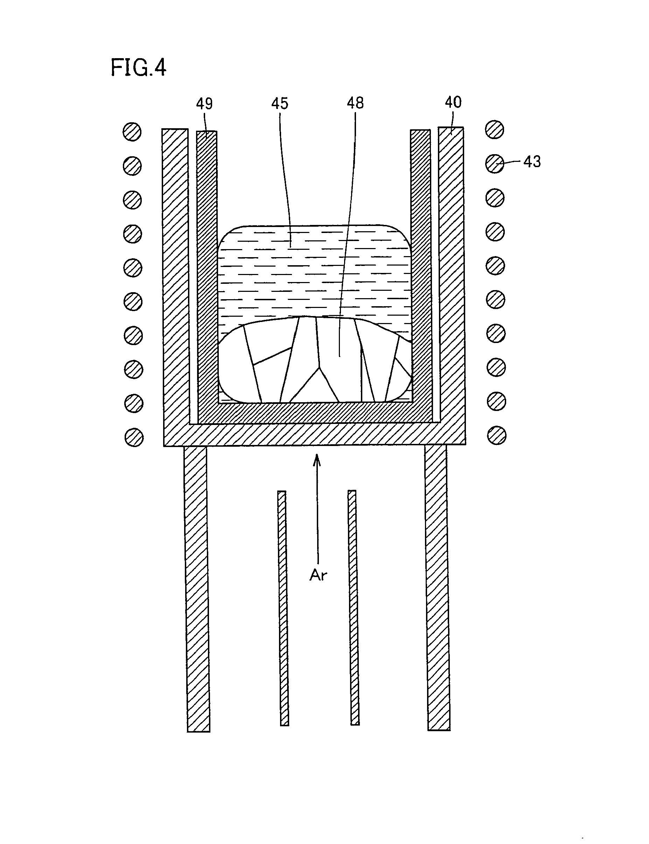

Fig. 4 is a schematic diagram of a casting apparatus used in the present invention. As shown in Fig. 4, the casting method is a method of manufacturing an ingot by directly cooling and unidirectionally solidifying the raw material silicon that has been molten by heating in a crucible 49 made of quartz or the like. Heat of molten silicon 45 held in quartz crucible 49 is removed by a cooling gas from the bottom surface portion of a graphite mold 40 accommodating quartz crucible 49 and a temperature is controlled by a heating apparatus 43, so that unidirectional solidification of a silicon ingot 48 from the bottom surface portion toward the upper surface portion of quartz crucible 49 is achieved. An inert gas such as helium may be employed as the cooling gas, in addition to argon.

According to the silicon recycling method of the present invention, the silicon scrap is molten by heating and the molten silicon is unidirectionally solidified so that the silicon ingot is formed, and thereafter the impurity-concentrated portion of the silicon ingot is removed. During unidirectional solidification, SiC produced due to pyrolysis of the release agent or the binder and formed as a result of reaction with the silicon melt adheres to the side surface portion and the bottom surface portion of silicon, that is, the ingot, in contact with the mold. In addition, as the ingot is fabricated through unidirectional solidification, foreign substances and impurities such as the stripped release agent or SiC rise to surface and condense at the upper surface portion of the ingot. Therefore, by removing the upper surface portion, the side surface portion, the bottom surface portion, and the like that are the impurity-concentrated portions with a diamond saw or a grinder, concentration of impurities can be lowered.

### (F step: cooling substrate immersion step)

In this step of immersing the cooling substrate, the content of an impurity element having a small segregation coefficient, that is, more likely to segregate, such as iron, aluminum and titanium is decreased. As a ratio of concentration of these metal impurity elements in solid silicon to concentration thereof in molten silicon, or what is called a distribution coefficient, is as low as 10⁻⁶ to 10⁻², efficient purification is possible.

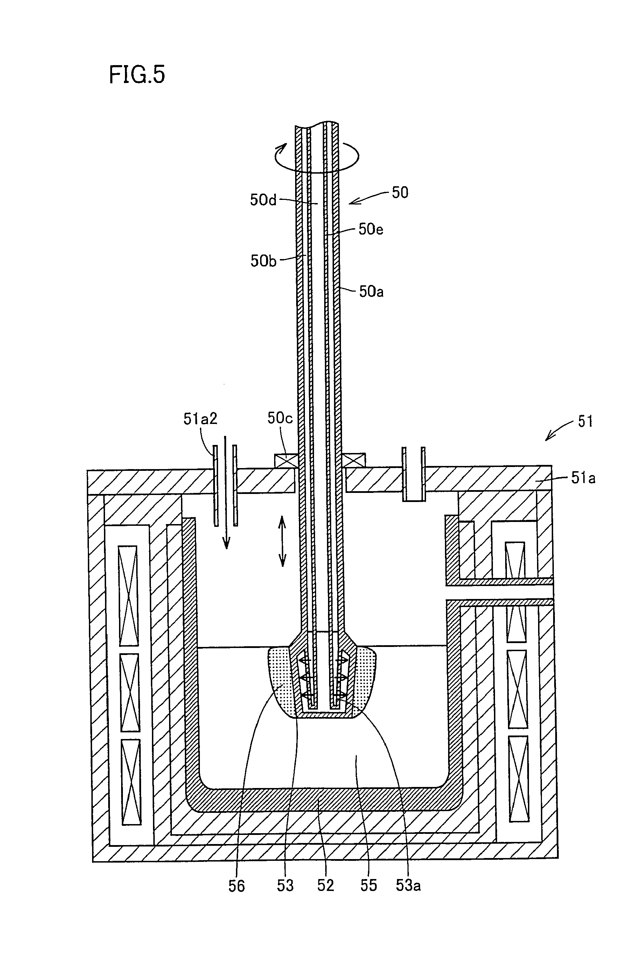

Fig. 5 is a schematic diagram of an apparatus used for immersing the cooling substrate and lifting up a purified silicon chunk. As shown in Fig. 5, a hollow rotation shaft 50 is implemented as a double pipe, and an inner wall of a cooling fluid introduction pipe 50a and an inner wall of a crystallization substrate 53 are continuous to each other. A cooling gas introduction passage 50b is formed between an outer wall of a cooling fluid discharge pipe 50e and the inner wall of cooling fluid introduction pipe 50a. Crystallization substrate 53 has a space inside and is coupled to cooling gas introduction passage 50b. When a cooling gas is introduced through cooling gas introduction passage 50b, the cooling gas is injected from a cooling gas outlet 53a into the space within crystallization substrate 53 so that crystallization substrate 53 is cooled. An end portion of cooling fluid discharge pipe 50e within crystallization substrate 53 opens into crystallization substrate 53 and the cooling gas that has absorbed heat from crystallization substrate 53 is discharged through a cooling fluid discharge passage 50d.

Crystallization substrate 53 immersed in the molten silicon is cooled such that a temperature of its outer surface is lower than 1414°C which is a melting point of silicon and purified silicon 56 is deposited on the outer surface of crystallization substrate 53. A flow rate of the cooling gas is controlled such that a prescribed amount of purified silicon 56 is deposited. In deposition of purified silicon 56, most of metal impurities is passed into molten silicon 55 owing to segregation effect, and an amount of metal impurities contained in purified silicon 56 that has deposited on the outer surface of crystallization substrate 53 significantly decreases. Therefore, high-purity purified silicon can be obtained by melting the silicon scrap by heating, thereafter immersing the crystallization substrate in the molten silicon, and depositing silicon on the surface of crystallization substrate.

When crystallization substrate 53 is immersed in molten silicon, hollow rotation shaft 50 is rotated. A seal mechanism 50c for ensuring air-tightness of a melting furnace 51 and allowing rotation of hollow rotation shaft 50 is provided in a portion where hollow rotation shaft 50 penetrates a wall of melting furnace 51. A lift mechanism (not shown) for immersing crystallization substrate 53 in molten silicon 55 in a crucible 52 during the process and lifting up crystallization substrate 53 from molten silicon 55 after the process is provided at an upper end of hollow rotation shaft 50.

An inert gas, for example, argon gas is introduced into melting furnace 51 from an atmospheric gas introduction pipe 51a2, to set an inert gas atmosphere in melting furnace 51. As shown in Fig. 5, hollow rotation shaft 50 is lowered to immerse crystallization substrate 53 in molten silicon 55, and it is set to any rotation speed, for example, not lower than 400rpm. For example, a nitrogen gas is employed as the cooling gas to be introduced into crystallization substrate 53 and a flow rate thereof is set to 700L/min, so that crystallization substrate 53 is cooled. After the cooling gas is introduced for a prescribed period, hollow rotation shaft 50 is lifted up in order to collect purified silicon 56 that has deposited on the outer surface of crystallization substrate 53, and rotation of hollow rotation shaft 50 and introduction of the cooling gas are stopped. How to remove purified silicon 56 from crystallization substrate 53 will be described in detail in connection with the H step.

### (G step: suspended substance removal step)

In melting the raw material silicon scrap, suspended substances are produced at the surface of molten silicon. Examples of the suspended substances include the stripped release agent, quartz firmly adhered to silicon due to strip of the release agent and contact of the molten silicon with the surface of the mold, SiC formed as a result of reaction of silicon with soot generated from the release agent, or oxide or nitride of silicon, or the like. The suspended substance is called dross and it can be removed from the surface of molten silicon with a mechanical method. Therefore, efficiency in purification of silicon can be enhanced by removing the suspended substances at the surface of molten silicon after the silicon scrap is molten by heating. In addition, when the step of injecting the process gas while stirring molten silicon is also performed, inclusions such as silicon carbide and silicon nitride contained in the molten silicon rise to the surface of the silicon melt owing to the process gas that has been made finer. Therefore, by subsequently removing the suspended substances at the surface of the silicon melt, efficiency in purification can particularly be enhanced. For example, a dipper-shaped or hoe-shaped dross removal instrument made of a graphite or ceramic material is used as removal means, and the dross is scraped off with a dross removal device after the upper lid of the melting furnace is detached.

### (H step: silicon strip step)

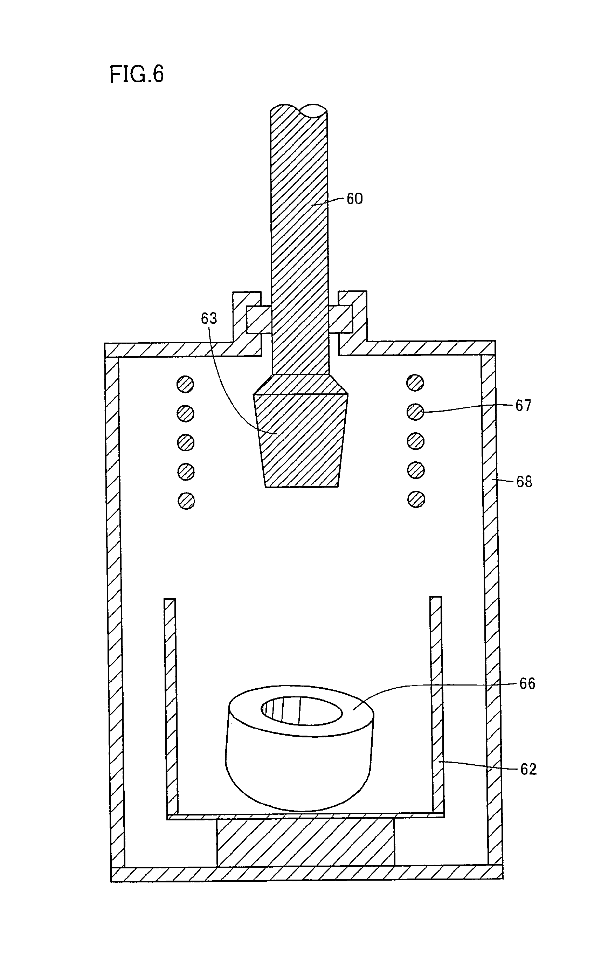

Fig. 6 is a schematic diagram of a silicon chunk strip apparatus used in the present invention. This apparatus is an apparatus for removing purified silicon lifted up in the F step, and as shown in Fig. 6, a removal apparatus 68 includes a heater 67 heating purified silicon that has deposited on an outer circumferential surface of a crystallization substrate 63. Heater 67 is implemented by an induction heating coil or the like. Crystallization substrate 63 is connected to the upper portion of purified silicon removal apparatus 68 and crystallization substrate 63 is induction-heated, so that a contact surface between crystallization substrate 63 and purified silicon is molten by heating. Purified silicon is thus stripped to fall into a purified silicon collection container 62, whereby purified silicon 66 can be collected. The heater can be implemented by an induction heating coil, and induction heating can be performed under any power conditions such as output from 20 to 60kW, voltage from 150 to 3 50V and frequency from 8 to 45kHz

With the recycling method including the steps above, silicon for solar batteries can efficiently be manufactured. In addition, a high-purity silicon ingot can be formed by melting such silicon in a mold and unidirectionally solidifying the same. In carrying out the present invention, for example, an amount of grinding the scrap surface, a size after crushing, a flow rate of the process gas, the rotation speed of the hollow rotation shaft, and the like should be selected as appropriate such that an optimal state is achieved, depending on an amount of raw material silicon to be processed or a shape of the crucible.

### (Example 1)

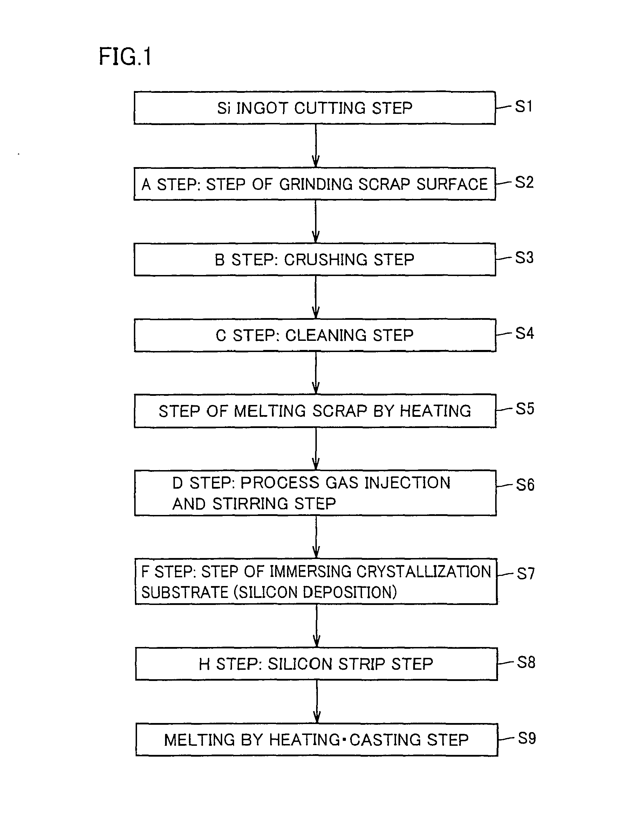

Fig. 1 is a diagram showing steps in the silicon recycling method in the present example. In the present example, as shown in Fig. 1, initially, a polycrystalline silicon ingot was cut (step 1) (hereinafter step is referred to as S). Out of removed silicon scraps, the upper surface scrap was subjected to the A step, in which the surface of the scrap was ground by approximately 3µm with the grinder (S2). Thereafter, the B step was performed to make the size of the scrap small enough to be loaded into the crucible, and the scrap was crushed into a size from 3 to 5cm with the jaw crusher serving as the crushing device (S3). Thereafter, the C step was performed to clean away and remove impurity such as iron on the surface of the crushed silicon raw material (S4). Cleaning was performed in such a manner that the silicon raw material was put in a stainless basket, the basket was successively passed through the surfactant bath, the water washing bath, the etching bath, and the water washing bath each for twenty minutes while being shaken, and the silicon raw material was dried with hot air. Here, a mixed acid which is a mixture liquid of fluoric acid and nitric acid was used in the etching bath.

Successively, the silicon scrap was molten by heating (S5). Melting of silicon was performed in the following manner. Initially, 2kg of the cleaned silicon raw material was charged into crucible 32 in melting furnace 31 as shown in Fig. 3. In the present example, the quartz crucible (not shown) was placed in the graphite susceptor (graphite crucible) and the silicon raw material was charged into the quartz crucible. After charging, argon gas was introduced in melting furnace 31 to set an inert gas atmosphere, and thereafter, graphite crucible 32 was induction heated with electromagnetic induction heating apparatus 33 to melt silicon in the quartz crucible by heating. The silicon melt was held at a prescribed process temperature.

Thereafter, the D step was performed, in which the process gas was injected and stirring was performed (S6). In the D step, as shown in Fig. 3, the argon gas which is a process gas was supplied at a flow rate of 1L/min through process gas introduction passage 35d, stirring shaft 35a was lowered by means of the lift mechanism while the process gas is being injected from process gas outlet 35e of stirring portion 35b, and stirring portion 35b was immersed in molten silicon 34. Here, a pressure in process gas introduction was set, for example, in a range from approximately 0.15 to 0.3MPa, which is greater than atmospheric pressure, so that stable injection of the process gas was continued.

After stirring portion 35b was lowered into molten silicon 34, stirring shaft 35a was rotated by a rotation drive mechanism. As a result of rotation of stirring shaft 35a, bubbles of the process gas injected from process gas outlet 35e were made finer and uniform mixing was achieved. Inclusions such as oxide, carbide or nitride of silicon or the like included in molten silicon 34 rose up to the surface of the silicon melt owing to fine bubbles 36 of argon gas. After the argon gas injection and stirring process was performed for a prescribed period, introduction of the process gas was stopped and process gas introduction passage 35d and discharge pipe 32a were closed by means of an electromagnetic valve. Then, upper lid 31a of melting furnace 31 and stirring shaft 35a were moved upward and the upper surface of the melting furnace was closed by means of a gate valve (not shown).

Thereafter, the F step was performed, in which the crystallization substrate was immersed and the purified silicon chunk was lifted up (S7). In the F step, as shown in Fig. 5, initially, hollow rotation shaft 50 and upper lid 51a were connected to melting furnace 51 and the gate valve (not shown) was opened. Then, nitrogen gas was introduced into cooling fluid introduction pipe 50a at 700L/min and crystallization substrate 53 was immersed in molten silicon 55 while it is rotated at 400rpm. After crystallization substrate 53 was immersed for a prescribed period, hollow rotation shaft 50 was moved upward, the cooling gas was stopped, and the purified silicon chunk was lifted up.

Thereafter, the H step was performed, to strip and collect the purified silicon chunk (S8). In the H step, as shown in Fig. 6, hollow rotation shaft 60 was moved and connected to purified silicon removal apparatus 68. Here, the upper surface of the melting furnace was closed by means of the gate valve (not shown) and the inert gas atmosphere was held. In addition, purified silicon removal apparatus 68 was filled with the argon gas, the induction heating coil was used as heating apparatus 67, and output, voltage and frequency were set to 30kW, 190V and 8.4kHz respectively. Then, in one minute, purified silicon was molten at the interface with crystallization substrate 63 and stripped therefrom, and purified silicon 66 fell under its own weight and was collected by purified silicon collection container 62.

The obtained purified silicon was molten by heating and cast in order to obtain a polycrystalline silicon ingot for solar batteries, using the unidirectional solidification method (S9). Thereafter, after the silicon ingot was cut into a block of a prescribed size with the diamond saw, the block was sliced into wafers each having a thickness of 200 µm with the wire saw in order to obtain wafers for solar batteries. Even after such a process, a problem of wire cut due to foreign substances such as SiC did not arise, and therefore, it was proved that the ingot scrap is sufficiently recyclable as the raw material silicon for solar batteries.

### (Example 2)

In the present example, initially, the polycrystalline silicon ingot was cut. Out of the cut away silicon scraps removed by cutting, the upper surface scrap and the side surface scrap were used as the raw material to be processed. Then, the B step was performed to crush the raw material to be processed, such that the size thereof is small enough to be loaded into the crucible. The roll crusher was used as the crushing device and the raw material was crushed into a size from 3 to 5cm. Thereafter, the C step was performed to remove impurity such as iron on the surface of the crushed silicon raw material, and the raw material to be processed was cleaned. Cleaning was performed in such a manner that the silicon raw material was put in a stainless basket, the basket was successively passed through the surfactant bath, the water washing bath, the etching bath, and the water washing bath each for twenty minutes while being shaken, and the silicon raw material was dried with hot air. Here, the etching bath was filled with a solution of sodium hydroxide.

Thereafter, the silicon raw material was molten. In melting the silicon raw material, as shown in Fig. 3, initially, 2kg of the raw material to be processed was charged into crucible 32 in melting furnace 31. In the present example, the silicon raw material was charged into the graphite crucible and the argon gas was introduced in melting furnace 31 to set an inert gas atmosphere. Then, graphite crucible 32 was induction heated with electromagnetic induction heating apparatus 33 to melt silicon by heating. The silicon melt thus obtained was held at a prescribed process temperature.

Thereafter, the D step was performed, in which the process gas was injected and stirring was performed. Injection of the process gas was performed in such a manner that the argon gas was injected as a process gas at a flow rate of 1L/min through process gas introduction passage 35d from process gas outlet 35e of stirring portion 35b, and stirring shaft 35a was lowered by means of the lift mechanism while stirring portion 35b was immersed in molten silicon 34. Here, a pressure in process gas introduction was set, for example, in a range from approximately 0.15 to 0.3MPa which is greater than atmospheric pressure, so that stable injection of the process gas could be continued.

After stirring portion 35b was lowered into molten silicon 34, stirring shaft 35a was rotated by the rotation drive mechanism. As a result of rotation of stirring shaft 35a, bubbles of the process gas injected from process gas outlet 35e were made finer and uniform mixing was achieved. Inclusions such as oxide, carbide or nitride of silicon or the like included in molten silicon 34 rose up to the surface of the silicon melt owing to fine bubbles 36 of the argon gas. After the argon gas injection and stirring process was performed for a prescribed period, introduction of the process gas was stopped and process gas introduction passage 35d and discharge pipe 32a were closed by means of an electromagnetic valve. The D step thus ended.

Thereafter, the G step was performed to remove suspended substances. In removing the suspended substances, as shown in Fig. 3, upper lid 31a of melting furnace 31 and stirring shaft 35a were moved upward and the upper surface of melting furnace 31 was closed by means of a gate valve (not shown). Thereafter, a hoe-shaped dross removal instrument made of graphite was attached instead of stirring shaft 35a and the gate valve was opened, so that the dross floating at the surface of the melt was strained out. Thereafter, as in Example 1, immersion of the cooling substrate (F step) as well as lifting of the purified silicon chunk and strip of the purified silicon (H step) were successively performed. Silicon thus obtained was cast to obtain a polycrystalline silicon ingot for solar batteries and the obtained ingot was cut into a block of a prescribed size with the diamond saw, to obtain wafers for solar batteries. The block was sliced into wafers for solar batteries each having a thickness of 200µm. Here, a problem of wire cut due to foreign substances such as SiC did not arise, and it was proved that the ingot scrap is sufficiently recyclable as the raw material silicon for solar batteries.

### (Example 3)

In the present example, the process was performed as in Example 1, except that the side surface scrap was used in addition to the upper surface scrap as the raw material silicon and that process gas injection and stirring (D step) was not performed. Here, a mass ratio between the upper surface scrap and the side surface scrap in the raw material silicon was set to 50:50. The silicon resulting from the process was cast to obtain a polycrystalline silicon ingot for solar batteries. Thereafter, the silicon ingot was cut into a block of a prescribed size with the diamond saw to obtain wafers for solar batteries each having a thickness of 200µm, Consequently, a problem of wire cut due to foreign substances such as SiC did not arise, and it was proved that the silicon scrap is sufficiently recyclable as the raw material silicon for solar batteries.

### (Example 4)

In the present example, the process was performed as in Example 2, except that only the side surface scrap was used as the raw material silicon, strip and collection of purified silicon (H step) was not performed, and casting for obtaining a polycrystalline silicon ingot for solar batteries was not performed. Namely, the steps of B→C→D→G→F were successively performed as the process steps. As shown in Fig. 6, in the F step, the lifted purified silicon chunk could mechanically be stripped from crystallization substrate 63 in a tapered shape, as crystallization substrate 63 had a diameter smaller in the lower end portion than in the upper end portion. Specifically, in lifting up the purified silicon chunk shown in Fig. 5, hollow rotation shaft 50 and upper lid 51a were moved to a purified silicon chunk strip apparatus (not shown) provided separately, and the purified silicon chunk was detached by pulling the purified silicon chunk downward from the crystallization substrate with a hook for hooking the purified silicon chunk. The silicon chunk thus obtained was cut with the wire saw. Here, a problem of wire cut due to foreign substances such as SiC did not arise, and it was proved that the ingot scrap is sufficiently recyclable as the raw material silicon for solar batteries.

### (Example 5)

In the present example, the process was performed as in Example 3, except that only the upper surface scrap was used as the raw material silicon, process gas injection and stirring (D step) was performed, and strip and collection of the purified silicon chunk (H step) and casting for obtaining a polycrystalline silicon ingot for solar batteries were not performed. Namely, the steps of A→B→C→D→F were successively performed as the process steps. After immersion of the crystallization substrate (F step), as shown in Fig. 6, the lifted purified silicon chunk was mechanically stripped from crystallization substrate 63 in the tapered shape. Specifically, in lifting up the purified silicon chunk shown in Fig. 5, hollow rotation shaft 50 and upper lid 51a were moved to a purified silicon chunk strip apparatus (not shown) provided separately, and the purified silicon chunk was detached by pulling the purified silicon chunk downward from the crystallization substrate with a hook for hooking the purified silicon chunk, as in Example 4. The silicon chunk thus obtained was cut with the wire saw. Here, a problem of wire cut due to foreign substances such as SiC did not arise, and it was proved that the ingot scrap is sufficiently recyclable as the raw material silicon for solar batteries.

### (Example 6)

In the present example, the process was performed as in Example 5, except that casting step (E step) was performed instead of immersion of the crystallization substrate (F step) and the step of lifting up the purified silicon chunk. Namely, the steps of A→B→C→D→E were successively performed as the process steps. In the E step, as shown in Fig. 4, after silicon ingot 48 obtained by casting after melting by heating was taken out from quartz crucible 49, the side surface portion and the bottom surface portion that had been in contact with quartz crucible 49 were ground with the grinder, and the impurity-concentrated portion such as an adhered thin piece of the quartz crucible was ground away. In addition, the upper surface portion was also ground away by several µm with the grinder. Thereafter, silicon was cut with the wire saw. Here, a problem of wire cut due to foreign substances such as SiC did not arise, and it was proved that the ingot scrap is sufficiently recyclable as the raw material silicon for solar batteries.

### (Example 7)

In the present example, only the bottom surface scrap cut away from the polycrystalline silicon ingot was used as the raw material silicon, and the bottom surface scrap was cleaned with kerosine for cleaning away a lubricating oil used in cutting and then air-dried. The raw material silicon was loaded into graphite crucible 52 in melting furnace 51 as shown in Fig. 5 for melting, and the raw material silicon was held at a prescribed process temperature. Thereafter, immersion of crystallization substrate 53 (F step) and lifting of purified silicon chunk 56 were performed. Thereafter, as shown in Fig. 6, the lifted purified silicon chunk was mechanically stripped from crystallization substrate 63 in a tapered shape having a diameter smaller in the lower end portion than in the upper end portion. Specifically, in lifting up the purified silicon chunk shown in Fig. 5, hollow rotation shaft 50 and upper lid 51a were moved to a purified silicon chunk strip apparatus (not shown) provided separately, and the purified silicon chunk was detached by pulling the purified silicon chunk downward from the crystallization substrate with a hook for hooking the purified silicon chunk. Silicon thus obtained was cut with the wire saw. Here, a problem of wire cut due to foreign substances such as SiC did not arise, and it was proved that the ingot scrap is sufficiently recyclable as the raw material silicon for solar batteries.

### (Example 8)

In the present example, the scrap cut away from a single crystal silicon ingot was used as the raw material silicon, and the scrap was cleaned with kerosine for cleaning away a grind liquid used in cutting and then air-dried. The raw material silicon was loaded into crucible 49 in a casting furnace as shown in Fig. 4, the E step was performed, and cast silicon ingot 48 was taken out from quartz crucible 49. Thereafter, the side surface portion and the bottom surface portion that had been in contact with quartz crucible 49 were ground with the grinder, and the impurity-concentrated portion such as an adhered thin piece of the quartz crucible was removed. In addition, the upper surface portion was also ground by several µm with the grinder. Thereafter, silicon was cut with the wire saw. Here, a problem of wire cut due to foreign substances such as SiC did not arise, and it was proved that the ingot scrap is sufficiently recyclable as the raw material silicon for solar batteries.

### (Comparative Example 1)

After the steps of A→B→C→D were performed in Example 1, heating was stopped without performing immersion of the crystallization substrate (F step) and lifting of the purified silicon chunk. The molten silicon was allowed to solidify by itself and silicon was taken out from the quartz crucible in the graphite susceptor. The side surface portion and the bottom surface portion that had been in contact with the quartz crucible were ground with the grinder, an adhered thin piece of the quartz crucible was ground away, and the upper surface portion was also ground away by several µm with the grinder. Thereafter, when silicon was cut with the wire saw, a problem of wire saw cut arose and slicing became impossible. Examining a portion where wire saw cut occurred with an SEM, inclusion was observed. As a result of ultimate analysis, the inclusion was turned out to be SiC.

### (Comparative Example 2)

After the steps A→B→C were performed in Example 1, obtained silicon was cast in order to obtain a polycrystalline silicon ingot for solar batteries, without performing the process gas injection and stirring step (D step). After the obtained ingot was cut into a block having a prescribed size without removing the impurity-concentrated portion of the ingot, cutting with the wire saw for obtaining wafers for solar batteries was attempted. Then, a problem of wire saw cut arose and slicing became impossible. Examining a portion where cut occurred with an SEM, inclusion was observed. As a result of ultimate analysis, the inclusion was turned out to be SiC.

It should be understood that the embodiments and the examples disclosed herein are illustrative and non-restrictive in every respect. The scope of the present invention is defined by the terms of the claims, rather than the description above, and is intended to include any modifications within the scope and meaning equivalent to the terms of the claims.

### INDUSTRIAL APPLICABILITY

A silicon scrap obtained by cutting a silicon chunk can efficiently be recycled as a high-purity raw material silicon for solar batteries.

Support for the claims and further embodiments are defined in the following itemized list:
1. A silicon recycling method of using a silicon scrap obtained by cutting a silicon chunk as a silicon raw material for a solar battery, comprising the steps of:
   melting said silicon scrap by heating;
   forming a silicon ingot by unidirectionally solidifying molten silicon; and
   removing an impurity-concentrated portion of said silicon ingot.
2. A silicon recycling method of using a silicon scrap obtained by cutting a silicon chunk as a silicon raw material for a solar battery, comprising the steps of:
   melting said silicon scrap by heating;
   injecting a process gas into molten silicon;
   forming a silicon ingot by unidirectionally solidifying said molten silicon; and
   removing an impurity-concentrated portion of said silicon ingot.
3. A silicon recycling method of using a silicon scrap obtained by cutting a silicon chunk as a silicon raw material for a solar battery, comprising the steps of:
   melting said silicon scrap by heating; and
   immersing a crystallization substrate (53) in molten silicon (55) and depositing silicon on a surface of the crystallization substrate (53).
4. The silicon recycling method according to item 3, further comprising the step of separating silicon on the surface of said crystallization substrate from said crystallization substrate.
5. The silicon recycling method according to item 3, wherein
   said silicon chunk is a silicon ingot obtained by melting a silicon raw material for a solar battery in a mold and solidifying the molten silicon raw material.
6. The silicon recycling method according to item 5, wherein
   the silicon scrap obtained by cutting said silicon ingot is at least one of an upper surface scrap (25), a side surface scrap (23) and a bottom surface scrap (24) of said silicon ingot.
7. The silicon recycling method according to item 6, wherein
   said silicon scrap is used after a surface thereof is ground.
8. The silicon recycling method according to item 3, wherein
   said silicon scrap is used after it is crushed.
9. The silicon recycling method according to item 8, wherein
   crushing of the silicon scrap is performed after the silicon scrap is cut.
10. The silicon recycling method according to item 3, wherein
   said silicon scrap is used after it is cleaned.
11. The silicon recycling method according to item 10, wherein
   cleaning of the silicon scrap is performed after the silicon scrap is crushed.
12. Silicon manufactured with the silicon recycling method according to item 3.
13. A silicon ingot formed with unidirectional solidification after silicon manufactured with the silicon recycling method according to item 3 is molten in a mold.
14. A silicon recycling method of using a silicon scrap obtained by cutting a silicon chunk as a silicon raw material for a solar battery, comprising the steps of:
   melting said silicon scrap by heating;
   injecting a process gas into molten silicon; and
   immersing a crystallization substrate (53) in said molten silicon (55) and depositing silicon on a surface of the crystallization substrate (53).
15. A silicon recycling method of using a silicon scrap obtained by cutting a silicon chunk as a silicon raw material for a solar battery, comprising the steps of:
   melting said silicon scrap by heating;
   injecting a process gas into molten silicon;
   removing a suspended substance at a surface of said molten silicon; and
   immersing a crystallization substrate (53) in said molten silicon (55) and depositing silicon on a surface of the crystallization substrate (53).

## Claims

1. A silicon recycling method of using a silicon scrap obtained by cutting a silicon chunk as a silicon raw material for a solar battery, comprising the steps of:
melting said silicon scrap by heating; and
immersing a crystallization substrate (53) in molten silicon (55) and depositing silicon on a surface of the crystallization substrate (53).

2. The silicon recycling method according to claim 1, wherein
said silicon scrap has a particulate inclusion of SiC on its surface.

3. The silicon recycling method according to claim 2, further comprising the step of:
grinding said surface of said silicon scrap before melting said silicon scrap by heating.

4. The silicon recycling method according to claim 1 or 2, further comprising the step of separating silicon on the surface of said crystallization substrate from said crystallization substrate.

5. The silicon recycling method according to claim 1 or 2, wherein
said silicon chunk is a silicon ingot obtained by melting a silicon raw material for a solar battery in a mold and solidifying the molten silicon raw material.

6. The silicon recycling method according to claim 5, wherein
the silicon scrap obtained by cutting said silicon ingot is at least one of an upper surface scrap (25), a side surface scrap (23) and a bottom surface scrap (24) of said silicon ingot.

7. The silicon recycling method according to claim 1 or 2, wherein
said silicon scrap is melted after it is crushed.

8. The silicon recycling method according to claim 1 or 2, wherein
said silicon scrap is melted after it is cleaned.

9. The silicon recycling method according to claim 8, wherein
cleaning of the silicon scrap is performed after the silicon scrap is crushed.

10. The silicon recycling method according to claim 1 or 2, further comprising the step of:
injecting a process gas into molten silicon before immersing a crystallization substrate in molten silicon.

11. The silicon recycling method according to claim 10, further comprising the step of:
removing a suspended substance at a surface of said molten silicon after injecting a process gas.

12. The silicon recycling method according to claim 10, wherein
said process gas consists of an inert gas.

13. The silicon recycling method according to claim 10, further comprising the step of stirring said molten silicon, while injecting said process gas.

14. Silicon manufactured with the silicon recycling method according to claim 1 or 2.

15. A silicon ingot formed with unidirectional solidification after silicon manufactured with the silicon recycling method according to claim 1 or 2 is molten in a mold.
